# Europäisches Patentamt

## European Patent Office

## Office européen des brevets

(19)

(11) Veröffentlichungsnummer: **0 075 074**
**A1**

(12)

# EUROPÄISCHE PATENTANMELDUNG

(21) Anmeldenummer: **82105494.7**

(22) Anmeldetag: **23.06.82**

(51) Int. Cl.³: **B 60 D 1/00**, B 60 D 1/06, B 60 D 1/18

(30) Priorität: **22.09.81 DE 8127651 U**
**11.06.82 DE 8216913 U**

(43) Veröffentlichungstag der Anmeldung: **30.03.83**
**Patentblatt 83/13**

(84) Benannte Vertragsstaaten: **BE DE FR NL SE**

(71) Anmelder: **Ohde geb. Kamm, Irmgard,**
**Adolf-Schönfelder-Strasse 76, D-2000 Hamburg 76 (DE)**

(72) Erfinder: **Ohde geb. Kamm, Irmgard,**
**Adolf-Schönfelder-Strasse 76, D-2000 Hamburg 76 (DE)**

(74) Vertreter: **Richter, Joachim, Dipl.-Ing. et al,**
**Patentanwälte Richter u.Werdermann Neuer Wall 10,**
**D-2000 Hamburg 36 (DE)**

(54) **Arbeitsgerät für Fahrzeuge, insbesondere Kraftfahrzeuge mit einer Anhängerkugelkupplung, und Boote mit einem am Bootskörper vorgesehenen Kugelkupplungselement.**

(57) Das Arbeitsgerät besteht aus einer auf die Anhängerkugelkupplung eines Fahrzeuges oder auf ein anhängerkugelkupplungsartig ausgebildetes, an einem Bootskörper befestigtes Element aufsetzbaren und arretierbaren Tragplatte mit einer motorisch oder von Hand angetriebenen Seilwinde zum selbständigen Freischleppen von im Gelände festgefahrenen Fahrzeugen und zum Slippen von kleinen Wasserfahrzeugen.

EP 0 075 074 A1

ACTORUM AG

BAD ORIGINAL

Arbeitsgerät für Fahrzeuge, insbesondere Kraftfahrzeuge
mit einer Anhängerkugelkupplung, und Boote mit einem am
Bootskörper vorgesehenen Kugelkupplungselement

Die Erfindung betrifft ein Arbeitsgerät für Fahrzeuge, insbesondere Kraftfahrzeuge, mit einer Anhängerkugelkupplung, und Boote mit einem am Bootskörper vorgesehenen Kugelkupplungselement.

Bekannt sind Geländefahrzeuge und Lastkraftwagen mit an dem Fahrzeugrahmen fest angeordneten Seilwinden, die beispielsweise zum selbständigen Freischleppen bei festgefahrenen Fahrzeugen im Gelände oder zum "Slippen" eines kleinen Wasserfahrzeuges benutzt werden können. Demgegenüber sind Personenkraftfahrzeuge nicht mit Seilwinden ausgerüstet und eine Nachrüstung eines Personenkraftwagens mit einer Seilwinde, wie dies bei Geländewagen und Lastkraftwagen gebräuchlich ist, ist wegen des hohen konstruktiven und finanziellen Aufwandes kaum möglich. Darüber hinaus würde eine am Fahrzeugrahmen eines Personenkraftfahrzeuges fest installierte Seilwinde den Luftwiderstand eines Fahrzeuges verändern und zu einer Gewichtserhöhung führen, was zu keiner Energieeinsparung beitragen würde. Auch die Ausrüstung von kleinen Booten mit lösbaren Seilwinden ist nicht bekannt.

Die Erfindung löst die Aufgabe, ein Arbeitsgerät zu schaffen, mit dem mit einer Anhängerkugelkupplung versehene Kraftfahrzeuge, insbesondere Personenkraftfahrzeuge, und Boote, die mit einem am Bootskörper vorgesehenen Kugelkupplungselement versehen sind, mit einer Seilzugeinrichtung ohne hohen technischen und finanziellen Aufwand ausgerüstet bzw. nachgerüstet werden können, um darüber hinaus auch dem Kraftfahrzeugführer die Möglichkeit für ein selbständiges Freischleppen bei festgefahrenem Fahrzeug im Gelände oder ein Anlandziehen eines kleinen Wasserfahrzeuges ohne zusätzliche Hilfe zu ermöglichen.

Zur Lösung dieser Aufgabe wird ein Arbeitsgerät gemäß der eingangs beschriebenen Art vorgeschlagen, das erfindungsgemäß in der Weise ausgebildet ist, daß es aus einer Tragplatte besteht, die auf ihrer Oberseite eine Seilwinde und eine mit dieser verbundene Antriebseinrichtung trägt und die auf ihrer Unterseite mit einer Kupplungskugelübergreifeinrichtung versehen ist, die aus zwei halbschalenförmigen, sich zu einem kugelförmigen Innenraum ergänzenden Formkörperteilen mit einer bodenseitigen Öffnung besteht, die beide mittels einer Schraubverbindung miteinander verbindbar sind und von denen der eine Formkörperteil fest an der Unterseite der Tragplatte befestigt ist, während der andere Formkörperteil scharnierartig an dem Formkörperteil angelenkt ist, wobei beide Formkörperteile derart an der Tragplatte gehalten sind, daß die von der bodenseitigen Öffnung gebildete Ebene parallel zur Tragplatte liegend ist.

Eine weitere Lösung der Aufgabe besteht darin, daß das Arbeitsgerät aus einer Tragplatte besteht, die auf ihrer Oberseite eine Seilwinde und eine mit dieser verbundene Antriebseinrichtung trägt und die auf ihrer Unterseite mit einer Kupplungskugelübergreifeinrichtung versehen ist, die als rohrstutzenartige Aufsteckhalterung ausgebildet ist, die mit einer Kupplungskugeleinführöffnung mit einer Feststelleinrichtung versehen ist und die im Bereich einer der Seitenkanten der Tragplatte an den auskragenden Endabschnitten von zwei an der der Seilwinde abgewandten Tragplattenfläche angeformten Tragstegen angeordnet ist, die konisch sich verjüngend zur Aufsteckhalterung verlaufend sind.

Mit einem derart ausgebildeten Arbeitsgerät sind Kraftfahrzeuge und insbesondere Personenkraftfahrzeuge mit einer Anhängerkugelkupplung und kleine Wasserfahrzeuge, wie Boote, mit einem am Bootskörper vorgesehenen Kugelkupplungselement, jederzeit ausrüstbar und nachrüstbar. Dadurch, daß die Seilwinde mit einer Einrichtung versehen ist, vermittels der die Seilwinde auf der Anhängerkugelkupplung oder dem Kugelkupplungselement anbringbar und haltbar ist, ist die Möglichkeit geschaffen, Personenkraftfahrzeuge und auch Boote bei Bedarf und im Notfall mit einem derartigen Arbeitsgerät auszurüsten, welches jederzeit raumsparend mitgeführt werden kann. Hinzu kommt noch der Vorteil, daß das Arbeitsgerät jederzeit einsatzbereit ist, denn für den Gebrauch wird das Arbeitsgerät lediglich auf die Kugelkupplung aufgesetzt, mit der viele Kraftfahrzeuge, insbesondere Personenkraftfahrzeuge ausgerüstet sind. Vermittels der Kupplungskugelübergreifeinrichtung, mit der das Arbeitsgerät ausgestattet ist, ist ein müheloses und sicheres Befestigen des Arbeitsgerätes mit seiner Seilwinde an der Anhängerkugeljupplung möglich. Dadurch, daß das Arbeitsgerät lösbar mit der Kugelkupplung verbunden ist, kann das Arbeitsgerät jederzeit bei Nichtgebrauch abgenommen und im Fahrzeugkofferraum untergebracht werden. Hinzu kommt, daß mit einem derartigen Arbeitsgerät das Nachrüsten und auch das Ausrüsten von Fahrzeugen mit keinem hohen Kostenaufwand verbunden ist. Das Arbeitsgerät kann als Fahrzeug- und Bootszubehör auf dem Markt angeboten werden.

Auch kleine Wasserfahrzeuge, wie u.a. auch Sportboote, können mit diesem Arbeitsgerät ausgerüstet werden, wenn diese Boote mit einem Kugelkupplungselement ausgerüstet sind, welches am Bootsdeck fest angeordnet sein kann und welches eine der Anhängerkugelkupplung für Kraftfahrzeuge entsprechende Ausgestaltung aufweist. Auf ein derart an einem Bootskörper vorgesehenes Kugelkupplungselement wird das Arbeitsgerät lediglich derart aufgesetzt, daß die Kupplungskugelübergreifeinrichtung das Kugelkupplungselement übergreift und auf diesem sicher gehalten ist.

Das Arbeitsgerät ist jedoch universell verwendbar und kann z.B. überall dort zum Einsatz gelangen, wo Fahrzeuge beliebiger Bauart, auch Baufahrzeuge u.dgl., mit einem Kugelkupplungselement ausgerüstet sind, auf das das Arbeitsgerät mit seiner Kupplungskuegelübergreifeinrichtung aufgesetzt wird. Auch im Erdboden verankerte, ein Kupplungselement aufweisende Tragplatten können für den Einsatz des Arbeitsgerätes Verwendung finden.

Vorteilhafte Weiterbildungen der Erfindung sind in den Unteransprüchen beschrieben, wobei eine besonders vorteilhafte Ausgestaltung der Erfindung darin besteht, daß das freie Ende des Seils der Seilwinde des Arbeitsgerätes zwei Seilabschnitte aufweist, die an dem Stiel eines in an sich bekannter Weise ausgebildeten Spatens derart befestigt sind, daß die beiden Seilabschnittsbefestigungspunkte dicht übereinanderliegend sind. Diese Ausgestaltung hat den Vorteil, daß das selbständige Freischleppen eines festgefahrenen Fahrzeuges im Gelände oder das Anlandziehen eines Bootes möglich ist, ohne daß es hierzu zusätzlicher Hilfsmittel, wie Baum, Mauer od.dgl., bedarf, denn durch den in den Boden tief eingesteckten Spaten wird ein Befestigungspunkt für das Zugseil der Seilwinde des Arbeitsgerätes geschaffen, der einen ausreichenden Halt bei Anwendung von Zugkräften bietet, so daß sich hiermit mühelos Kraftfahrzeug- und Bootsbesitzer ohne zusätzliche Hilfe selbst helfen können.

Im folgenden wird der Gegenstand der Erfindung in den Zeichnungen erläutert. Es zeigt

Fig. 1    in einer schaubildlichen Ansicht ein Arbeitsgerät,

Fig. 2    in einer Ansicht von oben das Arbeitsgerät,

Fig. 3    in einer Ansicht von vorn das Arbeitsgerät,

Fig. 4    eine Ansicht auf die Kupplungskugelübegreifeinrichtung des Arbeitsgerätes,

Fig. 5    in einer Seitenansicht das an einem festen, als Spaten ausgebildeten Bezugspunkt befestigte Seil des Arbeitsgerätes,

Fig. 6    in einer Ansicht von oben eine weitere Ausführungsform des Arbeitsgerätes mit auf einer Tragplatte mit Kupplungskugelübergreifeinrichtung angeordneter Seilwinde,

Fig. 7    eine rückwärtige Ansicht des Arbeitsgerätes nach Fig. 6,

Fig. 8    eine Ansicht auf die Tragplatte des Arbeitsgerätes gemäß Fig. 6

Fig. 9    eine Seitenansicht des auf eine Anhängerkugelkupplung aufgesetzten Arbeitsgerätes.

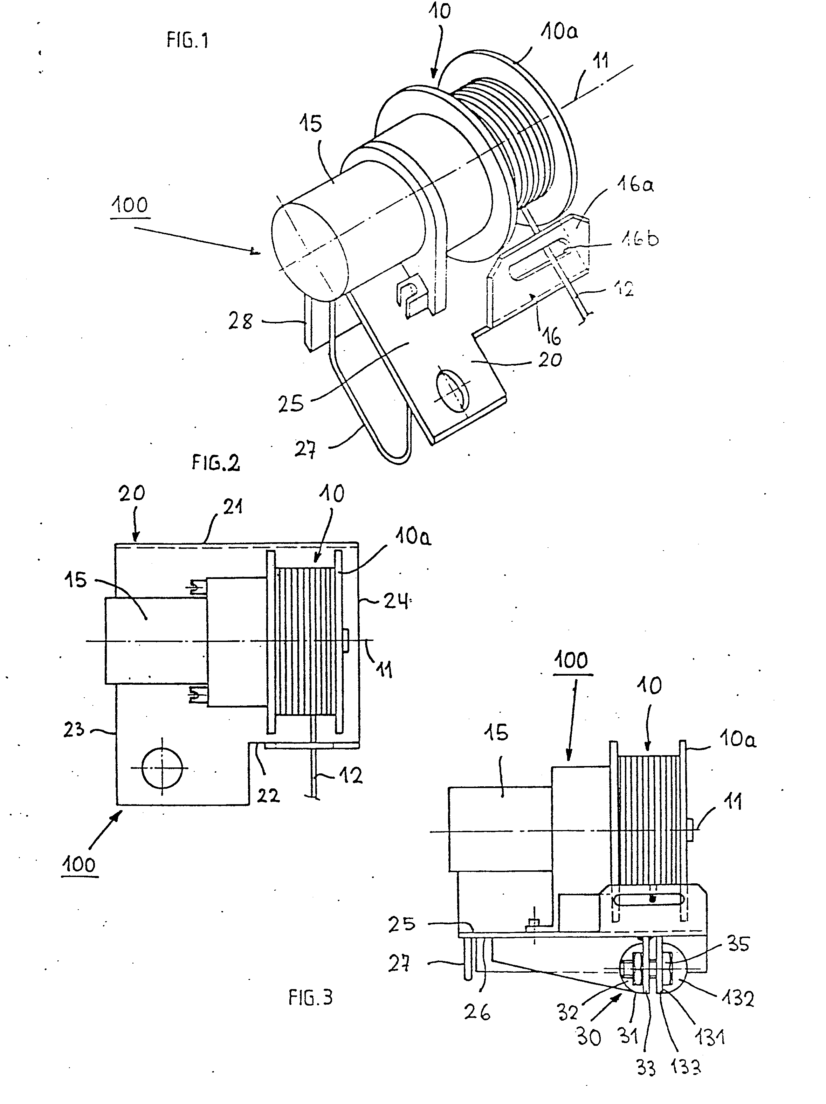

Gemäß Fig. 1 besteht das mit 100 bezeichnete Arbeitsgerät aus einer etwa reckteckförmigen Tragplatte aus metallischen Werkstoffen, wie Stahl od.dgl.. Die Längsseiten der Tragplatte 20 sind mit 21,22 und die Querseiten mit 23,24 bezeichnet.

Auf ihrer Oberseite 25 trägt die Tragplatte 20 eine Seilwinde 10, dessen Seiltrommel 10a mit einer Antriebseinrichtung 15 in Verbindung steht. An der Unterseite 26 der Tragplatte 20 ist benachbart zur Querseite 23 eine bügelartige Handhabe 27 angeordnet.

Die das Seil 12 aufnehmende Seiltrommel 10a der Seilwinde 10 ist mittels einer waagerechten Achse 11 auf der Oberseite 25 der Tragplatte 20 gehalten. Diese Lager- und Antriebsachse 11 steht mit der ebenfalls auf der Oberseite 25 der Tragplatte 20 angeordneten Antriebseinrichtung 15 in Verbindung (Fig.2). Im Seilabzugsbereich der Seilwinde 10 ist die Tragplatte 20 mit einer Seilführung 16 versehen, die aus einer senkrechten Führungsplatte 16a mit einem Führungsschlitz 16b besteht (Fig.1 und 3).

An der Tragplatte 20, und zwar im Bereich der rückwärtigen Längsseite 22, ist ein nach unten im rechten Winkel abgebogener Plattenabschnitt 28 ausgebildet, der nach erfolgter Montage des Arbeitsgerätes z.B. auf einer Anhängerkugelkupplung als Abstützfläche z.B. an der Kraftfahrzeugstoßstange dient (Fig.1).

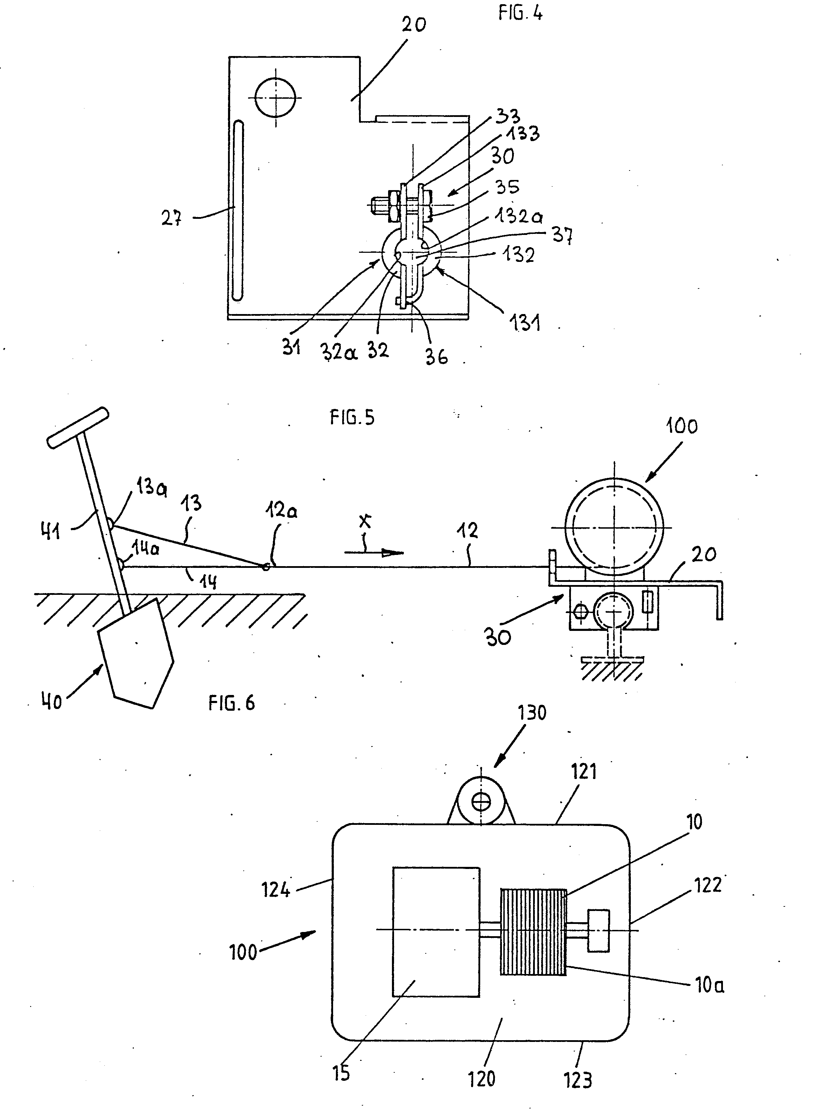

Zur Befestigung des Arbeitsgerätes 100 an einer in an sich bekannter Weise ausgebildeten Anhängerkugelkupplung für Kraftfahrzeuge oder einem in Fig. 5 bei 50 angedeuteten Kugelkupplungselement, welches entsprechend einer Anhängerkugelkupplung ausgebildet ist, weist die Tragplatte 20 an ihrer Unterseite 26 eine Kupplungskugelübergreifeinrichtung 30 auf, die aus zwei halbschalenartigen Formkörperteilen 31, 131 besteht (Fig.3). Jedes der beiden Formkörperteile 31 bzw. 131 besteht aus einem halbkugelförmigen Gehäuse 32 bzw. 132. Die beiden halbkugelförmigen Gehäuse 32,132 der beiden Formkörperteile 31,131 ergänzen sich zu einer Kugel mit einem kugelförmigen Innenraum.Die einander zugekehrten Begrenzungsränder der beiden halbkugelförmigen Gehäuse 32,132 tragen Anschlagplatten 33,133, von denen die Anschlagplatte 33 mit dem halbkugelförmigen Gehäuse 32 fest an der Unterseite 26 der Tragplatte 20 befestigt ist, während die andere Anschlagplatte 133 mit dem halbkugelförmigen Gehäuse 132 schwenkbar an der feststehend an der Tragplatte 20 angeordneten Anschlagplatte 33 angelenkt ist. Die Schwenkverbindung kann als Scharnier od.dgl. 36 ausgebildet sein (Fig.4).

Das Verbinden der beiden Anschlagplatten 33,133 erfolgt mittels einer bei 35 angedeuteten Schraubverbindung. Im bodenseitigen Bereich sind die beiden halbkugelförmigen Gehäuse 32,132 mit halbkreisförmigen Ausnehmungen 32a,132a versehen, die sich zu einer kreisförmigen Öffnung 37 ergänzen, wenn die beiden Formkörperteile 31,131 geschlossen sind (Fig.4). Die Größe dieser kreisförmigen Öffnung 37 ist derart bemessen, daß im geschlossenen Zustand der Kupplungskugelübergreifeinrichtung 30 der die Kugel tragende Hals der Anhängerkugelkupplung hindurchgreifen kann, so daß die Kugel dieser Anhängerkugelkupplung im Innenraum der geschlossenen Kugelkupplungsübergreifeinrichtung 30 zu liegen kommt. Eine derartige Anhängerkugelkupplung bzw. ein Kugelkupplungselement ist in Fig. 5 bei 50 angedeutet. Die Kugel der Kugelkupplung ist mit 51 und der Kugelkupplungshals mit 52 bezeichnet.

Wie Fig. 5 zeigt, ist das freie Ende 12a des Seiles 12 des Arbeitsgerätes 100 vermittels zweier Seilabschnitte 13,14 an dem Stiel 41 eines in an sich bekannter Weise ausgebildeten Spatens 40 befestigt. Die Befestigung der Enden der beiden Seilabschnitte 13,14 an dem Spatenstiel 41 erfolgt bei 13a,14a, und zwar derart, daß die beiden Befestigungspunkte dicht übereinander und oberhalb des Spatenblattes zu liegen kommen, damit der in das Erdreich eingesteckte Spaten bei Inbetriebnahme der Seilwinde des Arbeitsgerätes 100 bei einem in Pfeilrichtung X erfolgenden Zug auf den Spaten dieser nicht aus seiner in Fig. 5 gezeigten Position herausgezogen werden kann. Der Spaten ist Bestandteil des Arbeitsgerätes 100 und ist mit dem Seil 12 in der vorbeschriebenen Weise befestigt. Es besteht jedoch auch die Möglichkeit einer lösbaren Befestigung der beiden Seilabschnitte 13,14 an dem Spaten 40. Eine lösbare Befestigung der Seilabschnitte 13,14 am Ende 12a des Seiles 12 ist ebenfalls möglich. Mit dem in Fig. 5 gezeigten Arbeitsgerät ist die Möglichkeit gegeben, daß der Fahrer eines im Gelände steckengebliebenen Fahrzeuges ohne zusätzliche Hilfskräfte und ohne zusätzliche Hilfsmittel, wie Baum, Mauer od.dgl. selbsttätig sein Fahrzeug aus einer Bodensenke, einem Graben, bei Betätigung des Arbeitsgerätes, herausziehen kann, wobei ausschließlich als Zug- und Belastungspunkt der Spaten 40 dient.

Die Antriebseinrichtung 15 für die Seilwinde 10 ist als elektromotorischer Antrieb ausgebildet, der seine Stromzufuhr vom Versorgungsnetz des Kraftfahrzeuges erhalten kann. Darüber hinaus ist auch eine Handbetätigung der Seilwinde 10 mittels einer Handkurbel möglich. Die Antriebseinrichtung 15 ist dann von der Seilwinde 10 abkoppelbar.

Nach der in Fig. 6,7 und 8 gezeigten Ausführungsform besteht das Arbeitsgerät 100 aus einer auf einer etwa rechteckförmigen Tragplatte 120 mit den Seitenkanten 121,122,123,124 angeordneten Seilwinde 10, deren Seiltrommel bei 10a angedeutet ist. Der Antrieb der Seiltrommel 10a kann ebenfalls von Hand oder elektromotorisch erfolgen. Mit 15 ist eine Antriebseinrichtung bezeichnet, die mit einem Übersetzungsgetriebe versehen sein kann, das besonders dann von Vorteil ist, wenn ein Handkurbelbetrieb an der Seiltrommel 10a vorgesehen ist.

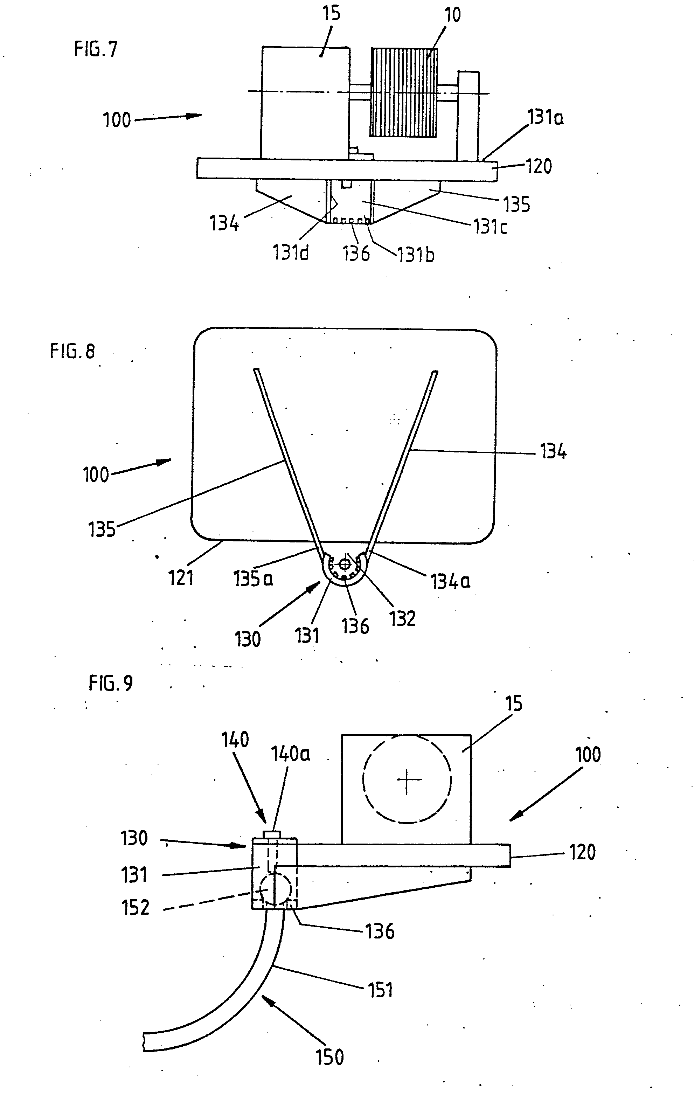

Die Tragplatte 120 besteht aus metallischen Werkstoffen, insbesondere Stahl, jedoch auch kunststoffbeschichtete metallische Werkstoffe können zur Herstellung der Tragplatte verwendet werden; sie ist mit einer Kupplungskugelübergreifeinrichtung 130 versehen, die so ausgebildet ist, daß nach erfolgtem Aufsetzen diese Einrichtung 130 auf eine in Fig. 9 bei 150 angedeutete Kugelkupplung für für Anhänger die Kupplungskugel umgreift und somit auf dieser sicher gehalten ist.

Diese Kupplungskugelübergreifeinrichtung 130 besteht aus einer rohrstutzenartigen Halterung 131, die im Bereich einer der vier Seitenkanten 121 bis 124 der Tragplatte 120 angeordnet ist.

Bei dem in Fig. 8 gezeigten Ausführungsbeispiel ist die Halterung 131 im Bereich der Seitenkante 121 der Tragplatte 120 an den auskragenden Endabschnitten 134a,135a von zwei an der der Seilwinde 10 abgewandten Tragplattenfläche angeformten Tragstegen 134,135 angeordnet. Diese beiden Tragstege 134,135 sind senkrechtstehend auf der Tragplattenfläche mittels Schweiß- oder Schraubverbindungen so angeordnet, daß sie konisch sich verjüngend in Richtung zur Halterung 131 verlaufen und mit ihren freien Enden an dem Rohrstutzen der Aufsteckhalterung 131 befestigt sind.

Die Halterung 131 ist als Rohrstutzen ausgebildet, der in seinem oberen Bereich 131a verschlossen und in seinem bodenseitigen Bereich 131b offen ausgebildet ist. Diese bodenseitige Öffnung stellt gleichzeitig die Einführöffnung für die Kugelkupplung dar. Darüber hinaus ist der Rohrstutzen der Aufsteckhalterung 131 mit einem in Rohrstutzenlängsrichtung verlaufenden Einführschlitz 133 versehen, der in dem den beiden Tragstegen 134,135 zugekehrten Rohrstutzenabschnitt ausgebildet ist. Die beiden Tragstege 134,135 sind mit ihren freien Enden an den senkrechten, den Einführschlitz 133 begrenzenden Rändern des Rohrstutzens der Aufsteckhalterung 131 befestigt (Fig.8).

Die konisch verlaufende Anordnung der beiden Tragstege 134,135 in Richtung zum Einführschlitz 133 erleichtert das Aufsetzen der Seilwinde 10 mit ihrer Tragplatte 20 auf die Kugelkupplung 150. Darüber hinaus wirken beide Tragstege 134,135 versteifend auf die Tragplatte 120.

Der Rohrstutzen der Halterung 131 weist in seinem bodenseitigen Bereich 131b ein Rillenprofil 136 auf, das an der Innenwandfläche 131c des Rohrstutzens angeformt ist und in den Rohrstutzeninnenraum 131d hineinragt (Fig. 7 und 8).

Die Halterung und Befestigung des Arbeitsgerätes 100 mit der Tragplatte 120 erfolgt vermittels einer Feststelleinrichtung 140, die als Feststellschraube 140a ausgebildet sein kann und die an dem Rohrstutzen der Halterung 131 vorgesehen ist, so daß bei einer Betätigung der Feststelleinrichtung 140 bzw. bei einem Anziehen der Feststellschraube 140a der Rohrstutzen der Halterung 131 fest auf der Kugelkupplung 150 sitzt und gehalten ist.

Der Rohrstutzen der Halterung 131 weist eine Länge auf, aufgrund der sich der die Kupplungskugel 152 an seinem freien Ende tragende Kupplungstragstab 151 der Kugelkupplung 150 am unteren umlaufenden Rand des Rohrstutzens der Halterung 131 abstützen kann, so daß ein Verkanten der Tragplatte 120 mit der Seilwinde 10 vermieden wird. Darüber hinaus erfolgt eine zusätzliche Sicherung der Tragplatte 120 mit der Seilwinde 10 gegen ein Verkanten oder Verschieben durch das Rillenprofil 136, in das die Kupplungskugel 152 der Anhängerkugelkupplung 150 mit einem umlaufenden Abschnitt eingreift, wenn die Feststelleinrichtung 140 betätigt ist (Fig. 9).

- 11 -                                    0075074

Patentansprüche

1. Arbeitsgerät für Fahrzeuge, insbesondere Kraftfahrzeuge mit einer Anhängerkugelkupplung und Boote mit einem am Bootskörper vorgesehenen Kugelkupplungselement, dadurch gekennzeichnet, daß das Arbeitsgerät (100) aus einer Tragplatte (20) besteht, die auf ihrer Oberseite (25) eine Seilwinde (10) und eine mit dieser verbundene Antriebseinrichtung (15) trägt und die auf ihrer Unterseite (26) mit einer Kupplungskugelübergreifeinrichtung (30) versehen ist, die aus zwei halbschalenförmigen, sich zu einem kugelförmigen Innenraum ergänzenden Formkörperteilen (31,131) mit einer bodenseitigen Öffnung (37) besteht, die beide mittels einer Schraubverbindung (35) miteinander verbindbar sind und von denen der eine Formkörperteil (31) fest an der Unterseite (26) der Tragplatte (20) befestigt ist, während der andere Formkörperteil (131) scharnierartig an dem Formkörperteil (31) angelenkt ist, wobei beide Formkörperteile (31,131) derart an der Tragplatte (20) gehalten sind, daß die von der bodenseitigen Öffnung (37) gebildete Ebene parallel zur Tragplatte (20) liegend ist.

2. Arbeitsgerät für Fahrzeuge, insbesondere Kraftfahrzeuge mit einer Anhängerkugelkupplung und Boote mit einem am Bootskörper vorgesehenen Kugelkupplungselement, dadurch gekennzeichnet, daß das Arbeitsgerät (100) aus einer Tragplatte (120) besteht, die auf ihrer Oberseite (131a) eine Seilwinde (10) und eine mit dieser verbundene Antriebseinrichtung (15) trägt und die auf ihrer Unterseite mit einer Kupplungskugelübergreifeinrichtung (130) versehen ist, die als rohrstutzenartige Aufsteckhalterung (131) ausgebildet ist, die mit einer Kupplungskugeleinführöffnung (132) mit einer Feststelleinrichtung (140) versehen ist und die im Bereich einer (121) der Seitenkanten (121,122,123,124) der Tragplatte (120) an den auskragenden Endabschnitten (134a,135a) von zwei an der der Seilwinde (10) abgewandten Tragplattenfläche angeformten Tragstegen (134,135) angeordnet ist, die konisch sich verjüngend zur Aufsteckhalterung (131) verlaufend sind

3. Arbeitsgerät nach Anspruch 1, dadurch gekennzeichnet, daß die Tragplatte (20) im Seilabzugsbereich der Seilwinde (10) mit einer Seilführung (16) versehen ist.

4. Arbeitsgerät nach Anspruch 1 und 3, dadurch gekennzeichnet, daß die aus einem etwa rechteckförmigen Zuschnitt bestehende Tragplatte (20) benachbart zu einer ihrer beiden Querseitenkanten (23,24) an ihrer Unterseite (26) eine bügelartige Handhabe (27) trägt.

5. Arbeitsgerät nach Anspruch 2, dadurch gekennzeichnet, daß die Aufsteckhalterung (131) aus einem obenseitig verschlossenen und bodenseitig (131b) offenen Rohrstutzen mit einer Kupplungskugelfeststellschraube (140a) besteht.

6. Arbeitsgerät nach Anspruch 2 und 5, dadurch gekennzeichnet, daß der Rohrstutzen der Aufsteckhalterung (131) in seinem bodenseitigen Endbereich (131b) ein an der Rohrstutzeninnenwandfläche (131c) angeformtes, in den Rohrstutzeninnenraum (131d) hineinragendes Rillenprofil (136) aufweist.

7. Arbeitsgerät nach Anspruch 2,5 und 6, dadurch gekennzeichnet, daß die Aufsteckhalterung (131) aus zwei sich zu einem Rohrstutzen ergänzenden, halbschalenartigen Teilen besteht, die scharnierartig miteinander verbunden sind und eine Feststelleinrichtung, wie Feststellschrauben od.dgl., aufweisen.

8. Arbeitsgerät nach Anspruch 1 bis 7, dadurch gekennzeichnet, daß das freie Ende (12a) des Seils(12) der
   Seilwinde (10) zwei Seilabschnitte (13,14) aufweist,
   die an dem Stiel eines Spatens (40) derart befestigt sind,
   daß die beiden Seilabschnittsbefestigungspunkte (13a,14a)
   an dem Spatenstiel (41) dich übereinanderliegend sind.

9. Arbeitsgerät nach Anspruch 8, dadurch gekennzeichnet,
   daß die Seilabschnitte (13,14) lösbar an dem Spatenstiel (41) angeordnet sind.

1/3                    0075074

FIG.1

FIG.2

FIG.3

FIG. 4

FIG. 5

FIG. 6

FIG.7

FIG.8

FIG.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 186 939  (L.A. WOODS et al.) | 1-9 | B 60 D    1/00<br>B 60 D    1/06<br>B 60 D    1/18 |
| A | US-A-4 173 353  (R.W. STEELE) | 1-9 | |
| A | US-A-3 938 122  (J.E. MANGUS) | 1-9 | |
| A | US-A-1 566 740  (C.T. FORREST) | | |

RECHERCHIERTE
SACHGEBIETE (Int. Cl. ³)

B 60 D
B 63 B

Der vorliegende Recherchenbericht wurde für alle Patentansprüche erstellt.

| Recherchenort | Abschlußdatum der Recherche | Prüfer |
|---|---|---|
| DEN HAAG | 11-10-1982 | CINQUANTINI B. |